Europäisches Patentamt

European Patent Office

Office européen des brevets

(11) Publication number: **0 348 574 B1**

(19)

# (12) EUROPEAN PATENT SPECIFICATION

(45) Date of publication of patent specification: **16.02.94** (51) Int. Cl.5: **G01N 23/20**, G01N 23/22

(21) Application number: **88310137.0**

(22) Date of filing: **28.10.88**

(54) **Method of simultaneously measuring thickness and composition of film and apparatus therefor.**

(30) Priority: **28.06.88 JP 159956/88**

(43) Date of publication of application:
**03.01.90 Bulletin 90/01**

(45) Publication of the grant of the patent:
**16.02.94 Bulletin 94/07**

(84) Designated Contracting States:
**DE FR GB IT SE**

(56) References cited:
**EP-A- 0 108 447**
**EP-A- 0 183 043**
**EP-A- 0 197 157**
**DE-A- 3 442 722**

**PATENT ABSTRACTS OF JAPAN, vol. 11, no. 109 (P-564)[2556], 7th April 1987; & JP-A-61 259 151**

**PATENT ABSTRACTS OF JAPAN, vol. 9, no. 129 (P-361)[1852], 5th June 1985; & JP-A-60 014 109**

**PATENT ABSTRACTS OF JAPAN, vol. 10, no. 169 (P-468)[2225], 14th June 1986; & JP-A-61 022 241**

**PATENT ABSTRACTS OF JAPAN, vol. 3, no. 22 (E-93), 24th February 1979, page 57 E93; & JP-A-54 685**

(73) Proprietor: **KAWASAKI STEEL CORPORATION**
**No. 1-28, 1-Chome Kitahonmachi-Dori**
**Chuo-Ku, Kobe-City Hyogo 651(JP)**

(72) Inventor: **Kawabe, Junji c/o Technical Research Division**
**Kawasaki Steel Corporation**
**1, Kawasaki-cho**
**Chiba-shi Chiba 260(JP)**
Inventor: **Hashiguchi, Koichi c/o Technical Research Division**
**Kawasaki Steel Corporation**
**1, Kawasaki-cho**
**Chiba-shi Chiba 260(JP)**

(74) Representative: **Overbury, Richard Douglas et al**
**HASELTINE LAKE & CO**
**Hazlitt House**
**28 Southampton Buildings**
**Chancery Lane**
**London WC2A 1AT (GB)**

# Description

The present invention relates to a method of simultaneously measuring the thickness and composition of a film, wherein the thickness and composition of various films can be measured simultaneously and accurately, and an apparatus therefor.

A variety of films are present in the various industrial fields. As for films, there are examples in which a film is formed for the purpose of giving excellent characteristics to a material as in metal plating and another example where a film is produced spontaneously and inevitably. Amongst the former examples, there have been known a coated film, a sprayed film, a deposited film and the like, in addition to the various types of metal plating. Whereas, amongst the latter examples, there have been known rust produced by the corrosion of a metal, an oxide layer produced during the manufacturing process of a metallic material, and the like.

In either case, necessity has been strongly voiced for simultaneously and accurately measuring the thickness and composition of the film. For example, with the steel sheet which is coated by one of various alloys, it is desired that the coating film is excellent in resistance to corrosion, formability, welding properties, adhesion of coating and the like. It is evident from many case examples that the above-mentioned characteristics are closely related to the composition and thickness of the coating layer. Therefore, the products of coated steel sheets have a pressing need for carrying out process control in such a manner that the composition and thickness of the film are quickly and accurately measured, and the ideal composition and thickness of the film may then be obtained from the measured values. Further, from the recent tendency of attaching importance to productivity, it is strongly desired to carry out the measuring non-destructively and continuously.

As the method of non-destructively and continuously measuring the thickness of a film, measurement by the X-ray fluorescence method has been widely used. This method is conducted such that the film is irradiated by a characteristic X-ray or the like, whereby the fluorescent X-ray is generated from an element which composes the film, so that a thickness of the film is measured in the light of the previously searched relationship between the intensity of the fluorescent X-ray and the thickness.

On the other hand, as a method of non-destructively and continuously measuring the composition of the film, measurement by the X-ray diffraction method has been widely used. This method is conducted such that the film is irradiated by the characteristic X-ray, whereby the diffracted X-ray is generated from one or more crystalline substances contained in the film, so that the quantity or quantities of the crystallic substance or substances are measured in the light of the previously searched relationship between the intensity of the diffracted X-ray and the quantities of the crystalline substance or substances.

For example, in a production line of a galvannealed steel sheet in which an alloying process is applied to a molten Zn galvanized steel sheet to form a layer of an alloy between Fe and Zn, such a method has been widely adopted that a thickness of the coating film or a coating weight is measured such that the coating film is irradiated by the characteristic X-ray, the intensity of the $K\alpha$ ray (the fluorescent X-ray) of Zn contained in the coating film is measured and a coating weight is measured in the light of the previously searched relationship between the intensity of Zn - $K\alpha$ ray and the coating weight.

On the other hand, as for the composition of the coating film, since the characteristics of the coating film and the content of Fe in the coating film have a close relationship therebetween, it is necessary to measure the content of Fe in the coating film. Therefore, there has been known a socalled technique of using X-ray diffraction, wherein the coating film is irradiated by the characteristic X-ray to measure the intensity of the diffracted X-ray of the Fe - Zn alloy crystal in the coating film, as disclosed in Japanese Patent Unexamined Publication Nos. 169553/1985, 99688/1986 and 148355/1986.

An apparatus for carrying out measurements of fluorescent and diffracted X-rays is disclosed in JP 6122241A.

Anyway, it has heretofore been common to measure the composition and thickness of the coating film by two methods including the X-ray fluorescence method and the X-ray diffraction method, independently of each other.

Accordingly, the composition and thickness of the coating film are measured independently of each other by means of independent measuring heads holding X-ray tubes for each of the methods and belonging to optical measuring systems being independent from each other, or by means of measuring apparatuses being completely separate from each other.

However, when the two methods are conducted independently of each other as described above, there have been problems, for example that, in installing the measuring apparatuses, a large installation space is needed, thus resulting in a restriction imposed on the installation of other necessary equipment. Moreover, the main bodies of the measuring apparatuses are raised in cost, and at the same time, auxiliary equipment for the measuring apparatuses become expensive.

Further, it is important from the viewpoints of process control and obtaining of the characteristics, to measure the thickness and composition of the coating film simultaneously and at the same position.

However, since the measuring heads are separate from each other, it is impossible to measure at the same position simultaneously and so forth.

Further, the measured values of the thickness and composition of the film constitute substantial problems in the case where measurement is performed by

X-ray measuring methods, that there are many cases where the thickness is influenced by the composition, and vice versa the composition is influenced by the thickness. According to the knowledge of the inventors, for example, with the thickness of the coating film (the coating weight) of the galvannealed steel sheet, when the coating weight was measured by the X-ray fluorescence method, a measuring error (standard deviation) $\sigma$ in the coating weight at 60 g/m$^2$ was about $\sigma$ = 2.6 g/m$^2$ and a standard deviation $\sigma$ at the content of Fe of 10% was $\sigma$ = 0.6 % Fe, thus not necessarily achieving satisfactory results.

In EP 0108447 there is disclosed an apparatus for simultaneous measurement of diffraction and spectrographic data. There is, however, no mention of how this apparatus could be effectively applied to the present problem of measuring the thickness and composition of thin films.

In Japanese application no. 61-259151(A) there is described a means of simultaneously measuring zinc adhesion of a specimen and the extent of its alloying with iron by simultaneously detecting fluorescent X-rays generated from a specimen and X-rays diffracted on the surface of a specimen.

An X-ray tube is provided in opposed relation to the surface of a zinc plated steel plate having a flat surface. X-rays having a proper diffusion angle are incident on a specimen at a relatively large incident angle $\alpha$ from the X-ray tube though a slit and parallel X-rays are incident on the specimen at a relatively small incident angle $\beta$ through a solar slit. Some of the characteristic zinc X-rays generated from the incident rays of the specimen are detected by a detector through a slit. Parallel X-rays are diffracted in a specific direction determined by the interval of the crystal lattice surface of an alloy of iron and zinc on the surface of the specimen and the incident angle $\beta$, and the diffracted X-rays are detected by a detector through the solar slit.

The applicant has proposed a method by Japanese Patent Unexamined Publication No. 88128/1986 (EPA 0 197 057), wherein a subject to be measured is irradiated by the characteristic X-ray and a white (continuous) X-ray, and an angle of diffraction of the diffracted X-ray by an intermetallic compound of an alloy film, of the characteristic X-ray is detected to measure the composition of the alloy film from the angle of diffraction, and the intensity of the fluorescent X-ray from a metal differing from a substrate metal in the alloy film by the white X-ray is detected, so that the thickness of the alloy film is measured simultaneously from the intensity of the fluorescent X-ray and the composition of the alloy film.

However, in this method, since the composition of the alloy film is detected from the angle of diffraction of the diffracted X-ray by the intermetallic compound, it is necessary to detect the angle of diffraction while moving a detector by use of a goniometer or the like. Therefore, a movable portion is needed, and moreover, the provision of a highly accurate movable portion such as a goniometer on the subject to be measured is needed. This arrangement may not necessarily be particularly suitable when provided on line.

The present invention has been developed to obviate the above-described disadvantages of the prior art and has as its object the provision of a method of simultaneously measuring the thickness and composition, or content, of a film, and an apparatus therefor, wherein the thickness and composition of various films can be measured simultaneously at one and the same position with high accuracy, by use of a measuring head with a simplified construction having no movable portion.

In accordance with the present invention there is provided a method of simultaneously measuring the thickness of a film forming a coating on a substrate and the composition i.e. the content of an element forming a component of the film, wherein

said film, as being a subject to be measured, is irradiated by a single beam of X-rays from a single X-ray source;

the intensity of the diffracted X-rays of a crystalline substance in said film and the intensity of the fluorescent X-rays from said element, said intensities resulting from interaction of the X-ray beam with said film at a single spot on the surface of the film, are simultaneously detected, respectively, by at least two X-ray intensity detecting means including respective means for each intensity measurement; and characterised in that the thickness and composition of said film at said spot are simultaneously determined by calculation to combine the detected intensity values of the diffracted X-ray beam and of the fluorescent X-rays in both the determination of thickness and the determination of composition.

In accordance with the present invention there is also provided an apparatus for simultaneously measuring the thickness of a film forming a coating on a substrate and the composition i.e. the content of an element forming a component of the film, comprising:

a single X-ray source arranged to irradiate a single beam of X-rays onto a spot on the surface of said film;

a first X-ray intensity detector arranged to detect the intensity of the X-rays diffracted from said spot as a result of irradiation by said single beam;

a second X-ray intensity detector arranged to detect, simultaneously with the detection of the diffracted X-rays by the first detector, the intensity of the fluorescent X-rays emitted from said spot from said element as a result of irradiation by said single beam;

characterised by a means arranged simultaneously to determine the thickness and composition of said film at said spot by calculation to combine the detected intensity values of the diffracted X-ray beam and of the fluorescent X-rays in both the determination of thickness and the determination of composition.

In order to achieve a method capable of continuously and non-destructively measuring two factors including the thickness and composition of a film at the same time at the same position as easily as possible, the inventors carried out repeated trial and error experiments, with the result that the inventors obtained the following knowledge.

(1) For the purpose of quantitatively grasping the composition of the coating film of a galvannealed steel sheet, when the intensity of the diffracted X-ray by use of an X-ray diffraction device having an X-ray tube of a relatively high capacity (Cr target: 3 KW), a pulse height distribution curve was examined in detal to examine a suitable window width for the pulse height which is to be made as a subject to be measured. At this time, the diffracted X-ray (characteristic X-ray: Cr - $K\alpha$ ray) for each crystal lattice plane of a few types of Fe - Zn alloy crystal contained in the coating film was recognized within the scope of a specific pulse height, and similarly, generation of the Zn - $K\alpha$ ray (fluorescent X-ray) was ascertained as well. When, a suitable window width was selected for this Zn - $K\alpha$ ray, and the relationship between the thickness of the coating film (coating weight) and the intensity of the Zn - $K\alpha$ ray was examined, the inventors found that there was a close relationship therebetween.

(2) Similarly, when the intensity of the diffracted X-ray of the crystalline substance contained in the coating film and the intensity of the fluorescent X-ray of the element composing the coating film were measured for other coating films by use of various types of X-ray tubes having different targets (target: Cu, Fe, Cr, Co, Mo or W), the inventors found that there were close relationships between the intensities of the respective X-ray and the composition and thickness. In addition, when the above-described measurements were performed, $K\beta$ filters of Ni, V, Mn, Fe or the like were used properly in accordance with the types of targets and elements as being the subjects to be measured, which were contained in the coating film.

(3) The inventors obtained the knowledge that the measured value of the intensity of the diffracted X-ray according to the X-ray diffraction method and the measured value of the intensity of the fluorescent X-ray according to the X-ray fluorescence method were measured only by utilizing the single X-ray tube in the single measuring head (in one measuring apparatus) as described above.

(4) Furthermore, the inventors found that the following technical advantages were obtained by simultaneously performing the measurements according to both methods at the same position. More specifically, the intensity of the diffrated X-ray according to the X-ray diffraction method was influenced by the thickness of the film. On the other hand the intensity of the fluorescent X-ray according to the X-ray fluorescence method was frequently influenced by the composition of the film. For example, when the content of Fe (composition) and the coating weight (thickness) in the coating film of the galvannealed steel sheet were measured, even if the absolute values of the Fe - Zn alloy layers were equal between two plates, equal values of the intensities of the diffracted X-rays were not obtainable if the coating weights were different in value between the two sheets. Yet on the other hand, even if the coating weights were equal to each other between the two sheets, equal intensities of fluorescent X-rays were not obtainable if the densities of Fe were not equal. More specifically, the true values were not obtainable until the mutual corrections were made. Accordingly, in order to obtain the true values, it was necessary to correct the measured values according to both methods mutually. The inventors obtained the knowledge that, according to the present invention, measurement according to the X-ray diffraction method and the X-ray fluorescence method were performable simultaneously at the same position, whereby the mutual corrections were easily performed, so that the measured values of the content of Fe and the coating weight approached the true values, by repeating the mutal corrections.

The present invention is based on the above-described knowledge , and according to the present invention, the film as being the subject to be measured is irradiated by the single X-ray source to simultaneously detect the intensity of the diffracted X-ray from the crystalline substance in the film and the intensity of the fluorescent X-ray from the element composing the film by at least the two X-ray intensity detecting means. Subsequently, the thickness and composition at the same position are simultaneously measured from the detected values. Accordingly, information according to the X-ray fluorescence method and information according to the X-ray diffraction method can be obtained simultaneously at the same position, so that the thickness and compositions of the various types of films can be measured simultaneously with high accuracy.

Furthermore, the above-described measurement can be performed by use of an integrated type measuring head, with a simplified construction having no movable portion, so that the mechanism is simple and the reliability is high, and moreover, one measuring apparatus (measuring head) suffices in place of the two measuring apparatuses which have heretofore been necessary, thereby minimizing the required installation space. In addition, the measuring apparatus including the auxiliary equipment can be reduced in cost.

Further, the thickness and composition can be measured simultaneously at the same position, so that the measured values of the thickness and composition can be corrected mutually, thus improving the two measuring accuracies.

Furthermore, the X-ray measuring method is adopted, so that non-destructive and continuous measuring can be performed, and the measuring can be applied to the quality control and manufacture condition control for various metal coating steel strips, color-coated steel strips and the like.

By virtue of the above-described characteristic features, the advantages in industry brought about by the present invention are high.

Further, according to the method of the present invention, the thickness is measured by the X-ray fluorescence method, so that any type of element composing the film may be principally adopted only if it generates a fluorescent X-ray when irradiated by the characteristic X-ray. Furthermore, the composition is measured by the X-ray diffraction method, so that any type of crystalline substance composing the film may be adopted only if it displays the diffraction phenomenon when irradiated by the characteristic X-ray.

In short, in order to improve the meritorious effects of the present invention, it is important to select the type and capacity of the X-ray source in accordance with the thickness and composition of the film and further suitable filters, and to use suitable detectors. Furthermore, at the same time, from the research which has been made up to now, what is basically important when the composition and thickness are measured is to fully examine the selection of the crystalline substance of the film as being the subject to be measured and its diffraction plane and the elements composing the film, and the selection of the types of the fluorescent X-ray (K series, L series, and further, $\alpha$-ray or $\beta$-ray).

In practice, the actual physical value measured is not the thickness but the coating weight. However, since the specific gravity of the film is almost constant the thickness nay easily be derived.

The exact nature of this invention, as well as other objects and advantages thereof, will be readily apparent from consideration of the following description, relating to the accompanying drawings, given by way of example, in which like reference characters designate the same or similar throughout the figures and wherein:

Fig. 1 is a sectional view, partially including a block diagram, showing one embodiment of the measuring apparatus for working the present invention;

Fig. 2 is a sectional view showing a state where the diffracted X-ray is detected in the above embodiment;

Fig. 3 is a block diagram showing the basic arrangement for detecting the diffracted X-ray in the above embodiment;

Fig. 4 is a chart showing an example of the relationship between the pulse height and respective detection rates of the characteristic X-ray (diffracted X-ray) and the fluorescent X-ray, for explaining the principle of the present invention;

Fig. 5 is a chart showing the interrelation between the chemically analyzed value of the coating weight and the measured value according to the method of the present invention, for illustrating the meritorious effects of the present invention; and

Fig. 6 is a chart showing the interrelation between the chemically analyzed value of the content of Fe and the measured value according to the method of the present invention.

One embodiment of the present invention will hereunder be described in detail with reference to the accompanying drawings.

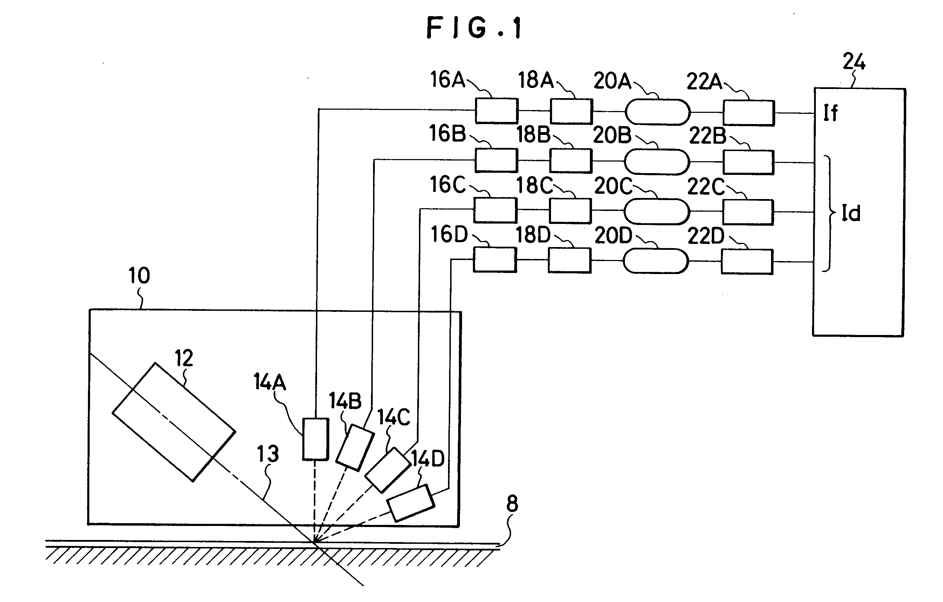

Fig. 1 shows the general arrangemenet of the embodiment of the apparatus for working the method according to the present invention.

In this embodiment, an integrated type measuring head 10 is provided with an X-ray tube 12 and at least two X-ray detectors (in this embodiment, four detectors 14A, 14B, 14C and 14D are used).

For example, the detector 14A detects the intensity of the fluorescent X-ray. The detector 14C provided in a direction of an angle of diffraction satisfying the formula of Bragg detects the intensity of the diffracted X-ray. The detectors 14B and 14D interposing the detector 14C therebetween detect the intensity of the background. As these detectors 14A - 14D, general purpose detectors such for example as a proportional counter tube and a scintillation counter tube are usable.

Outputs from the respective detectors 14A - 14D are input into pulse height analyzers 20A, 20B, 20C and 20D via pre-amplifier 16A, 16B, 16C and 16D and main amplifiers 18A, 18B, 18C and 18D, respectively.

Outputs from the respective pulse height analyzers 20A - 20D are counted by rate meters 22A, 22B, 22C and 22D, and thereupon, input into a recorder 24.

Action of this embodiment will hereunder be described.

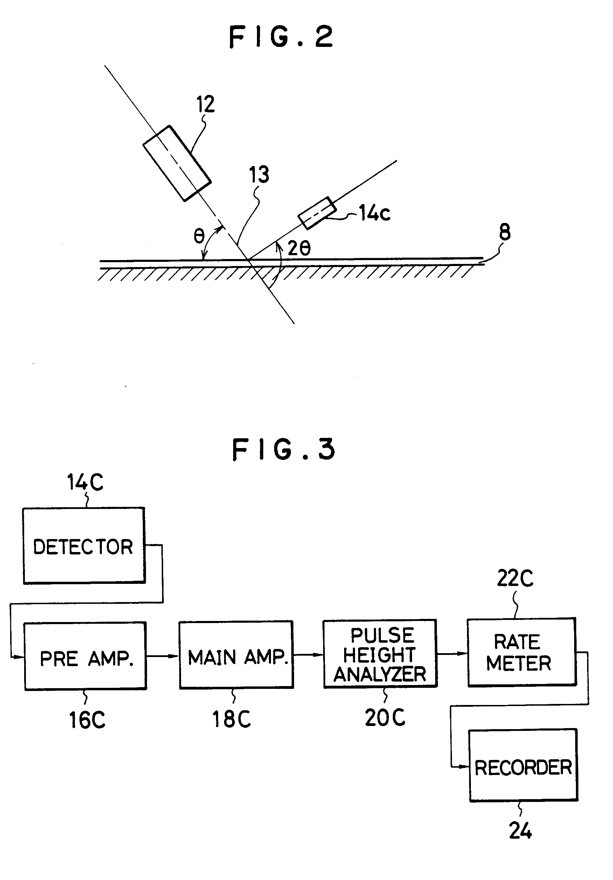

It is the concept of analysis of the crystalline substance according to the X-ray diffraction method that, as shown in Fig. 2, when the film 8 as being the subject to be measured is irradiated by the characteristic X-ray 13 taken out of a window of the single X-ray tube 12, the diffracted X-ray of the crystalline substance contained in the film 8 is obtained in a direction of an angle of diffraction $2\theta$ satisfying the formula of Bragg. This diffracted X-ray is detected by the detector 14C, passed through a course of the pre-amplifier 16C - the main amplifier 18C - the pulse height analyzer 20C - the rate meter 22C as shown in Fig. 3, recorded in the recorder 24 and output by a printer or the like.

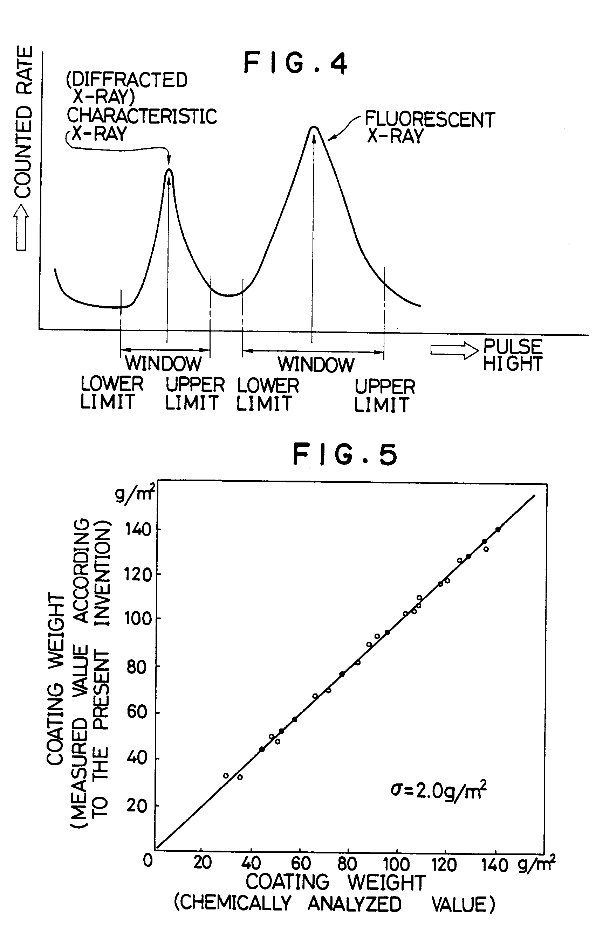

In Fig. 3, when the X-ray entering the detector 14C is analyzed in terms of pulse height by means of the pulse height analyzer 20C, the continuous X-ray and the fluorescent X-ray can be recognized in addition to the characteristic X-ray diffracted from the film 8. According to the X-ray diffraction method, the window shown to the left in Fig. 4 is set at the pulse height analyzer 20C and only the characteristic X-ray (diffracted X-ray) is electronically discriminated, whereby the characteristic value of the diffracted X-ray is obtained using the apparatus shown in Fig. 3. In this case, as shown in Fig. 4, when the pulse height of the fluorescent X-ray does not overlap with the pulse height of the characteristic X-ray and the fluorescent X-ray is produced by such an element that it is effective for measuring the thickness of the film, the window shown to the right in Fig. 4 is set at the pulse height analyzer 20A similarly to the above and the fluorescent X-ray is electronically discriminated, whereby, according to the principle of the non-dispersion type X-ray fluorescence method, the intensity of the fluorescent X-ray, obtained through the circuit containing the pre-amplifier 16A - the main amplifier 18A - the pulse height analyzer 20A and the rate meter 22A, which is similar to the one shown in Fig. 3, can be used for measuring the thickness (coating weight).

Now, differing from the diffracted X-ray, the fluorescent X-ray can be detected at almost all two-dimensional positions only if the detector 14A is located on the side of the X-ray tube 12 as referenced from the film surface, so that it is not necessary to install the detector 14A for the fluorescent X-ray at a specific distance and in a specific orientation. Accordingly, as shown in the embodiment, the detectors (14B - 14D) for measuring the diffracted X-ray and the detector (14A) for measuring the fluorescent X-ray can be provided separately of each other.

The coating film of the galvannealed steel sheet, the coating weight of the coating film and the mean content of Fe in the coating film vary independantly. These coating weights and mean content of Fe are measured by the measuring apparatus having a mounting head 10 including one X-ray tube of the Cr-target (broad focus type: 3KW) as the X-ray tube 12 and four gas sealed type proportional counter tubes as the detectors 14A - 14D. As the subject to be measured relating to the coating weight, the intensity of the fluorescent X-ray of the Zn - $K\alpha$ ray was detected by the detector 14A, while, as the subject to be measured relating to the mean content of Fe, the intensity of the diffracted X-ray of an intermetallic compound of Fe - Zn (the lattice plane space is about 1.22 Å) in the coating film was measured by the detector 14C. In this case, the intensity of the background (Cr - $K\alpha$ ray) was measured by the detectors 14B and 14C interposing the detector 14C, and the intensity of the diffracted X-ray measured by the detector 14C was corrected in terms of the background. In addition, the window of the pulse height analyzer 20A was set to a window width centered about the mean pulse height of the Zn - $K\alpha$ ray, while, the window of the pulse height analyzers 20B - 20D were set to a window width centered about the mean pulse height of the Cr - $K\alpha$ ray.

A measured value If of the intensity of the fluorescent X-ray based on an output from the pulse height analyzer 20A and a measured value Id of the intensity of the diffracted X-ray after the background correction, were inserted into predetermined analytical curves (recursive type) of the coating weight and the content of Fe, whereby the coating weight and the content of Fe were computed by a computer, respectively. Computing by the computer was based on the following expressions (1) and (2), and performed in accordance with a program of mutually correcting the coating weight and the content of Fe.

$$Ci = F_1 \ (Id, \ Wi\text{-}1) \qquad (1)$$

$$Wi = F_2 \ (If, \ Ci\text{-}1) \qquad (2)$$

where $Ci$ and $Ci\text{-}1$ are the contents Nos. i and i -1 of Fe calculated by repeated computing, and $Wi\text{-}1$ and $Wi$ are the coating weights Nos. i - 1 and i calculated by repeated computing.

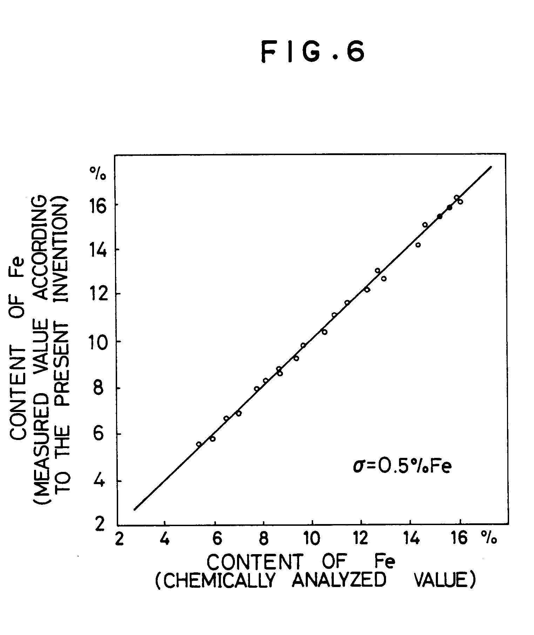

As a result of the foregoing, it was found that the coating weight and content of Fe of the galvannealed steel sheet were measurable simultaneously at the same position. Furthermore, as shown in Figs. 5 and 6, the measured values of the coating weight and content of Fe have almost no differences from the chemically analyzed values serving as the standards, respectively. The standard deviations $\sigma$ at the coating weight of 60 g/m$^2$ and the content of Fe at 10 % were 2.0 g/m$^2$ and 0.5 % Fe, respectively, and it was ascertained that the results were more accurate than those in the past.

In the above embodiment, the X-ray tube 12 was used as the X-ray source, however, the type of the X-ray source is not limited to this.

Furthermore, in the above embodiment, the present invention is applied to measurement of the coating weight of the coating film of the galvannealed steel sheet and the mean content of Fe contained in the film. However, it is apparent that the subject to be measured of the present invention is not limited to this, and the present invention can be applied to measurement of other films such as various metal coated steel strips, color coated steel strips and the like in a similar manner to the above.

## Claims

1. A method of simultaneously measuring the thickness of a film forming a coating on a substrate and the composition i.e. the content of an element forming a component of the film, wherein

   said film (8), as being a subject to be measured, is irradiated by a single beam of X-rays (13) from a single X-ray source (12);

   the intensity of the diffracted X-rays of a crystalline substance in said film and the intensity of the fluorescent X-rays from said element, said intensities resulting from interaction of the X-ray beam with said film at a single spot on the surface of the film, are simultaneously detected, respectively, by at least two X-ray intensity detecting means (14C,14A) including respective means for each intensity measurement; and characterised in that the thickness and composition of said film at said spot are simultaneously determined by calculation to combine the detected intensity values of the diffracted X-ray beam and of the fluorescent X-rays in both the determination of thickness and the determination of composition.

2. The method as set forth in claim 1, characterised in that the thickness and composition of said film (8) are determined through mutual corrections by iterative computing employing the following equations:

$$Ci = F_1 \ (Id, \ Wi\text{-}1)$$
$$Wi = F_2 \ (If, \ Ci\text{-}1)$$

   where $Ci$ and $Ci\text{-}1$ are the contents Nos. i and i-1 of the element calculated iteratively, $Wi\text{-}1$ and $Wi$ are the coating weights Nos. i - 1 and i calculated iteratively, $If$ is the intensity of the diffracted ray and $If$ is the intensity of the fluorescent ray.

3. An apparatus for simultaneously measuring the thickness of a film forming a coating on a substrate and the composition i.e. the content of an element forming a component of the film, comprising:

   a single X-ray source (12) arranged to irradiate a single beam of X-rays (13) onto a spot on the surface of said film (8);

   a first X-ray intensity detector (14C) arranged to detect the intensity of the X-rays diffracted from said spot as a result of irradiation by said single beam;

   a second X-ray intensity detector (14A) arranged to detect, simultaneously with the detection of the diffracted X-rays by the first detector, the intensity of the fluorescent X-rays emitted from said spot from said element as a result of irradiation by said single beam;

   characterised by a means arranged simultaneously to determine the thickness and composition of said film at said spot by calculation to combine the detected intensity values of the diffracted X-ray beam and of the fluorescent X-rays in both the determination of thickness and the determination of composition.

4. The apparatus as set forth in claim 3, characterised by further comprising a third X-ray intensity detector (14B,14D) arranged to detect the background intensity.

5. The apparatus as set forth in claim 3 or 4, characterised in that said X-ray source and all of said X-ray intensity detectors are housed in an integrated type measuring head (10).

6. The apparatus as set forth in any of claims 3, 4 or 5 characterised in that said X-ray source is a Cr target X-ray tube and said X-ray intensity detectors are gas sealed type proportional counter tubes.

**7.** A method according to claim 1 or 2 wherein the film is melt alloyed zinc.

**8.** An apparatus for measuring according to any of claims 3 to 6 wherein the film is melt alloyed zinc.

**Patentansprüche**

**1.** Verfahren zum gleichzeitigen Messen der Dicke eines Films, der eine Beschichtung auf einem Substrat bildet, und der Zusammensetzung, d.h. des Gehalts an einem Element, das eine Komponente des Films bildet,

wobei der genannte Film (8), der das Meßobjekt bildet, mit einem einzelnen Röntgenstrahlungsstrahl (13) von einer einzigen Röntgenstrahlungsquelle (12) bestrahlt wird, und

die Intensität der von einer kristallinen Substanz im genannten Film gebeugten Röntgenstrahlen und die Intensität der Röntgenfluoreszenzstrahlen vom genannten Element, welche Intensitäten aus einer Wechselwirkung des Röntgenstrahlungsstrahls mit dem genannten Film an einem einzigen Fleck an der Oberfläche des Films resultieren, jeweils gleichzeitig durch zumindest zwei Röntgenstrahlungs-Intensitätsdetektiereinrichtungen (14C, 14A), die entsprechende Einrichtungen für jede Intensitätsmessung enthalten, detektiert werden, dadurch gekennzeichnet, daß die Dicke und die Zusammensetzung des genannten Films am genannten Fleck gleichzeitig durch eine Berechnung, um die detektierten Intensitätswerte des gebeugten Röntgenstrahlungsstrahls und der Röntgenfluoreszenzstrahlen sowohl bei der Bestimmung der Dicke als auch bei der Bestimmung der Zusammensetzung zu kombinieren, bestimmt werden.

**2.** Verfahren nach Anspruch 1, dadurch gekennzeichnet, daß die Dicke und Zusammensetzung des genannten Films (8) über gegenseitige Korrekturen durch iteratives Berechnen unter Verwendung der folgenden Gleichungen bestimmt werden:

$$Ci = F_1 (Id, Wi-1)$$
$$Wi = F_2 (If, Ci-1),$$

worin Ci und Ci-1 die Gehalte Nr.i und i-1 des iterativ berechneten Elements sind, Wi-1 und Wi die iterativ berechneten Beschichtungsgewichte Nr. i-1 und i sind, Id die Intensität des gebeugten Strahls ist, und If die Intensität des Fluoreszenzstrahls ist.

**3.** Vorrichtung zum gleichzeitigen Messen der Dicke eines Films, der eine Beschichtung auf einem Substrat bildet, und der Zusammensetzung, d.h. des Gehalts an einem Element, das eine Komponente des Films bildet, welche Vorrichtung

eine einzige Röntgenstrahlungsquelle (12), die angeordnet ist, um mit einem einzelnen Röntgenstrahlungsstrahl (13) einen Fleck an der Oberfläche des genannten Films (8) zu bestrahlen,

einen ersten Röntgenstrahlungs-Intensitätsdetektor (14C), der angeordnet ist, um die Intensität der am genannten Fleck als Folge der Bestrahlung durch den genannten einzelnen Strahl gebeugten Röntgenstrahlen zu detektieren, und

einen zweiten Röntgenstrahlungs-Intensitätsdetektor (14A), der angeordnet ist, um, gleichzeitig mit der Detektion der gebeugten Röntgenstrahlen durch den ersten Detektor, die Intensität der vom genannten Fleck vom genannten Element als Folge der Bestrahlung durch den genannten einzelnen Strahl emittierten Röntgenfluoreszenzstrahlen zu detektieren, aufweist,

gekennzeichnet durch eine Einrichtung, die eingerichtet ist, um gleichzeitig die Dicke und die Zusammensetzung des genannten Films am genannten Fleck durch eine Berechnung zum Kombinieren der detektierten Intensitätswerte des gebeugten Röntgenstrahls und der Röntgenfluoreszenzstrahlen sowohl bei der Bestimmung der Dicke als auch bei der Bestimmung der Zusammensetzung zu bestimmen.

**4.** Vorrichtung nach Anspruch 3, dadurch gekennzeichnet, daß sie weiter einen dritten Röntgenstrahlungs-Intensitätsdetektor (14B, 14D) aufweist, der zum Detektieren der Hintergrundintensität angeordnet ist.

**5.** Vorrichtung nach Anspruch 3 oder 4, dadurch gekennzeichnet, daß die genannte Röntgenstrahlungsquelle und alle genannten Röntgenstrahlungs-Intensitätsdetektoren in einem Meßkopf (10) vom integrierten Typ untergebracht sind.

**6.** Vorrichtung nach einem der Ansprüche 3, 4 oder 5, dadurch gekennzeichnet, daß die genannte Röntgenstrahlungsquelle eine Cr-Target-Röntgenröhre ist und die genannten Röntgenstrahlungs-Intensitätsdetektoren Proportionalzählrohre mit abgeschlossener Gasfüllung sind.

7. Verfahren nach Anspruch 1 oder 2, bei welchem der Film schmelzlegiertes Zink ist.

8. Meßvorrichtung nach einem der Ansprüche 3 bis 6, bei welcher der Film schmelzlegiertes Zink ist.

**Revendications**

1. Procédé pour mesurer simultanément l'épaisseur d'un film formant un revêtement sur un substrat et la composition c'est-à-dire le contenu d'un élément formant un composant du film, dans lequel

   ledit film (8), étant un sujet à mesurer, est irradié par un faisceau unique de rayons X (13) en provenance d'une source (12) de rayons X;

   l'intensité des rayons X diffractés d'une substance cristalline dans ledit film et l'intensité des rayons X fluorescents en provenance dudit élément, lesdites intensités résultant de l'interaction du faisceau de rayons X avec ledit film en un seul point sur la surface du film, sont simultanément détectées, respectivement, par au moins deux moyens (14C, 14A) de détection d'intensité de rayons X comprenant des moyens respectifs pour chaque mesure d'intensité; caractérisé en ce que l'épaisseur et la composition dudit film audit point sont simultanément déterminées par calcul pour combiner les valeurs d'intensité détectées du faisceau de rayons X diffracté et des rayons X fluorescents à la fois en ce que concerne la détermination de l'épaisseur et la détermination de la composition.

2. Procédé selon la revendication 1, caractérisé en ce que l'épaisseur et la composition dudit film (8) sont déterminées par des corrections mutuelles par calcul itératif en utilisant les équations suivantes:

$$C_i = F1 (I_d, W_{i-1})$$
$$W_i = F2 (I_f, C_{i-1})$$

   ou $C_i$ et $C_{i-1}$ sont les contenus n° i et i-1 de l'élément calcules itérativement; $W_{i-1}$ et $W_i$ sont les poids des revêtements n° il et i calculés itérativement, $I_d$ est l'intensité du rayon diffracté et $I_f$ est l'intensité du rayon fluorescent.

3. Appareil pour mesurer simultanément l'épaisseur d'un film formant un revêtement sur un substrat et la composition c'est-à-dire le contenu d'un élément formant un composant du film, comprenant:

   une source unique (12) de rayons X agencée pour irradier un faisceau unique de rayons X (13) sur un point sur la surface dudit film (8);

   un premier détecteur (14C) d'intensité de rayons X agencé pour détecter l'intensité des rayons X diffractés par ledit point à la suite de l'irradiation par ledit faisceau unique;

   un second détecteur (14A) d'intensité de rayons X agencé pour détecter, simultanément avec la détection des rayons X diffractés par le premier détecteur, l'intensité des rayons X fluorescents émis par ledit point en provenance dudit élément à la suite de l'irradiation par le faisceau unique;

   caractérisé par un moyen agencé pour déterminer simultanément l'épaisseur et la composition dudit film audit point par calcul afin de combiner les valeurs d'intensité détectées du faisceau de rayons X diffracté et des rayons X fluorescents en ce qui concerne à la fois la détermination de l'épaisseur et la détermination de la composition.

4. Appareil selon la revendication 3, caractérisé en ce qu'il comporte en outre un troisième détecteur (14B, 14D) d'intensité de rayons X agencé pour détecter l'intensité du fond.

5. Appareil selon la revendication 3 ou 4, caractérisé en ce que ladite source de rayons X et tous lesdits détecteurs d'intensité de rayons X sont inclus dans une tête (10) de mesure du type intégré.

6. Appareil selon l'une quelconque des revendications 3, 4 ou 5 caractérisé en ce que ladite source de rayons X est un tube à rayons X à cible Cr et lesdits détecteurs d'intensité de rayons X sont des tubes compteurs proportionnels du type étanche aux gaz.

7. Procédé selon la revendication 1 ou 2 dans lequel le film est un alliage de zinc fondu.

8. Appareil de mesure selon l'une quelconque des revendications 3 à 6 dans lequel le film est un alliage de zinc fondu.

# FIG.1

EP 0 348 574 B1

# F I G . 2

# F I G . 3

# FIG. 4

# FIG. 5

# F I G . 6

CONTENT OF Fe
(CHEMICALLY ANALYZED VALUE)

$\sigma = 0.5\%$ Fe